Europäisches Patentamt

European Patent Office

Office européen des brevets

(19)

(11) **EP 1 501 046 A1**

(12) **EUROPEAN PATENT APPLICATION**
published in accordance with Art. 158(3) EPC

(43) Date of publication:
26.01.2005 Bulletin 2005/04

(51) Int Cl.⁷: **G06T 1/00**, G06T 17/40

(21) Application number: 03794188.7

(22) Date of filing: 02.09.2003

(86) International application number:
**PCT/JP2003/011210**

(87) International publication number:
**WO 2004/023395 (18.03.2004 Gazette 2004/12)**

(84) Designated Contracting States:
**AT BE BG CH CY CZ DE DK EE ES FI FR GB GR HU IE IT LI LU MC NL PT RO SE SI SK TR**

(30) Priority: **03.09.2002 JP 2002257544**

(71) Applicant: **NEC Corporation**
**Minato-ku, Tokyo 108-0014 (JP)**

(72) Inventor: **SAKAMOTO, Shizuo**
**Minato-ku, Tokyo 108-0014 (JP)**

(74) Representative: **Betten & Resch**
**Patentanwälte,**
**Theatinerstrasse 8**
**80333 München (DE)**

(54) **HEAD-MOUNTED OBJECT IMAGE COMBINING METHOD, MAKEUP IMAGE COMBINING METHOD, HEAD-MOUNTED OBJECT IMAGE COMBINING DEVICE, MAKEUP IMAGE COMPOSITION DEVICE, AND PROGRAM**

(57)     An eyeglasses simulation device, provided as an embodiment of a head-mounted object image synthesis device, measures, when combining eyeglasses with a face image of a user, a three-dimensional shape of a face of the person and its reflection characteristics, fits the eyeglasses selected by the user to the three-dimensional shape, estimates a position and an orientation of a face in the face image obtained by photographing the face of the person, produces an eyeglasses image in which the eyeglasses are arranged so as to match the face in the face image by the use of the estimated position and orientation, combines together the eyeglasses image and the face image, and displays a combined image. This creates a combined image of the face of the user and the eyeglasses like one as if the user actually put on the eyeglasses and confirmed the mounted state of the eyeglasses reflected in a mirror.

FIG.1

**Description**

Technical Field

The present invention relates to an image synthesis technique for combining together an image of a mount object to be mounted on a head, such as eyeglasses, an earring, a headgear, or a hairpiece, makeup to be applied to a face, or the like, and a face image of a user photographed in the state where such mounting or makeup, or the like is not actually carried out, without unnaturalness as if the user actually put it on and confirmed reflection in a mirror.

Background Art

When, for example, buying eyeglasses, a user normally actually goes to a shop where the user wears displayed objects and confirms reflection in a mirror. However, there is a limit to the displayed eyeglasses, which has been an obstacle when looking for eyeglasses more suiting user's taste.

Further, in sales using communication means such as the Internet, there has been difficulty in selecting eyeglasses because no eyeglasses exist at all at hand of a user. Similarly, in a shop, although it is desirable to display as many eyeglasses as possible for a user, this raises a problem of having much stock. Accordingly, it can be said that the situation is not preferable for both the user and the shop. This can also be said for what is generally mounted on a head, such as an earring, a headgear, or a hairpiece. On the other hand, particularly for the makeup, it has been difficult for the user to select cosmetics or a makeup method with full understanding in the sense that there is no alternative but to actually make up a face taking much time, thus requiring more labor than the mount object.

In view of this, there have been proposed image synthesis systems that can judge whether to match user's taste or not with respect to various mount objects, cosmetics, and so forth, without actually providing them or without directly making up a face.

Among those image synthesis systems, as one of the conventional techniques for eyeglasses, there is known the system wherein, after obtaining a face image of a user with a camera, an eyeglasses image stored in advance is combined with the face image by an operator manually designating a start position of the combination (e.g. see JP-A-S63(1988)-039290 (hereinafter, Document 1)). Further, there is also known the image synthesis system that enables designation of a position more matching a face of a user by inputting center positions of left and right eyes of the user (e.g. see JP-A-S63(1988)-076581 (hereinafter, Document 2), JP-A-S63(1988)-113671 (hereinafter, Document 3), JP-A-H08(1996)-031126 (hereinafter, Document 4), JP-A-H02(1990)-004312 (hereinafter, Document 5)). Further, there is also known the image synthesis system wherein a human being as a subject moves for matching (e.g. see JP-A-S63(1988)-261218 (hereinafter, Document 6)).

Further, there is also known the image synthesis system that directly measures a three-dimensional shape of a subject and utilizes it (e.g. see JP-A-H05(1993)-172545 (hereinafter, Document 7)). This image synthesis system carries out synthesis using the measured three-dimensional face shape and an eyeglasses frame shape and has a procedure for presentation to a user.

Moreover, there is also known the image synthesis system that can cope with a change in orientation or expression of a face, or with a precise simulation of lenses (e.g. see JP-A-H06(1994)-139318 (hereinafter, Document 8), JP-A-H06(1994)-118349 (hereinafter, Document 9)). In this image synthesis system, after obtaining a two-dimensional face image of a subject, a standard three-dimensional face model is fitted to the image to thereby carry out modification processing.

Further, there is also known the image synthesis system that, by having a person being a subject wear eyeglasses that serve to detect the orientation of a face, produces synthesized images naturally following movement of a head by the subject (e.g. see JP-A-H10(1998)-283455 (hereinafter, Document 10)).

On the other hand, among the foregoing image synthesis systems, as one of the conventional techniques for makeup, there is known the system that, after obtaining a face image of a user with a camera, displays it on a screen and, by operating a tablet, processes the image to carry out a makeup simulation (e.g. see JP-A-S62(1987)-144280 (hereinafter, Document 11)). Further, there are also known the image synthesis system wherein a light pen for image processing is designed into a shape of a makeup tool so as to be natural (e.g. see JP-A-S63(1988)-316037 (hereinafter, Document 12)), and the image synthesis system wherein lipstick or powder-based makeup and eyebrow cut are made as independent simulations, respectively (e.g. see JP-A-H06(1994)-319613 (hereinafter, Document 13)).

However, among the foregoing conventional image synthesis systems, in the simulators of the eyeglasses or the makeup, since the combination with the two-dimensional static face image is mainly aimed, the user cannot fully confirm its fitting, as different from actually carrying out the mounting, the makeup, or the like and looking it in a mirror.

Further, in Document 7, although face images of various postures can be produced by obtaining the three-dimensional shape of the face and carrying out the synthesis by the three-dimensional graphics, this merely rotates the "face" at the measured timing and thus cannot be said to be natural.

Further, in Document 8 and Document 9, although the standard three-dimensional model of the face is fitted to the two-dimensional face image to obtain depth information so as to carry out the synthesis by the three-dimensional graphics, since the depth information basically becomes the standard model itself, the unnaturalness further increases.

Further, in Document 10, although the orientation detection eyeglasses are put on, it is necessary to erase the orientation detection eyeglasses on the image when combining other eyeglasses, makeup, or the like. However, it is difficult to erase it completely.

As described above, the conventionally proposed image synthesis systems cannot present a combination result with no unnaturalness like one achieved by the confirmation in the mirror which has been carried out by the user.

Disclosure of the Invention

Therefore, it is an object of the present invention to enable an image being natural, i.e. having no unnaturalness, to be synthesized as if a mount object for a head, such as eyeglasses, an earring, a headgear, or a hairpiece, makeup, or the like were actually applied and confirmed in a mirror.

For accomplishing the foregoing object, a first invention is characterized by comprising a step of measuring a three-dimensional shape of a face of a person; a step of fitting eyeglasses to said measured three-dimensional shape; a step of estimating a position and an orientation of a face in an image obtained by photographing the face of said person; and a step of producing the eyeglasses in the image so as to match the face by the use of said estimated position and orientation of the face, and displaying it.

A second invention is characterized by comprising a step of measuring a three-dimensional shape of a face of a person and its reflection characteristics; a step of fitting eyeglasses to said measured three-dimensional shape; a step of estimating a position and an orientation of a face in an image obtained by photographing the face of said person, by the use of said three-dimensional shape and said reflection characteristics; and a step of producing the eyeglasses in the image so as to match the face by the use of said estimated position and orientation of the face, and displaying it.

In the second invention, a third invention is characterized by comprising, instead of the step of estimating a position and an orientation of a face in an image obtained by photographing the face of said person, by the use of said three-dimensional shape and said reflection characteristics, a step of producing bases in advance from said three-dimensional shape and said reflection characteristics, said bases adapted for estimating positions and orientations of the face in various postures and under various illumination conditions; and a step of estimating the position and the orientation of the face in the image by the use of said bases.

In the first, second, or third invention, a fourth invention is characterized in that the step of estimating a position and an orientation of a face in an image obtained by photographing the face of said person and the step of producing the eyeglasses in the image so as to match the face by the use of said estimated position and orientation of the face, and displaying it, are successively carried out.

In the first, second, third, or fourth invention, a fifth invention is characterized in that, instead of said eyeglasses, an earring, a headgear, a hairpiece, or another mount object for a head, or a combination thereof is combined with the image.

In the second, third, fourth, or fifth invention, a sixth invention is characterized in that a texture image with a little shade is used instead of said reflection characteristics.

A seventh invention is characterized by comprising a step of measuring a three-dimensional shape of a face of a person; a step of applying makeup to said measured three-dimensional shape; a step of fitting to said measured three-dimensional shape a face standard three-dimensional shape with a modification rule held in advance; a step of estimating a position and an orientation of a face in an image obtained by photographing the face of said person; a step of estimating an expression change of the face in said image; and a step of generating makeup in the image so as to match the face by the use of said estimated position and orientation of the face and said estimated expression change, and displaying it.

An eighth invention is characterized by comprising a step of measuring a three-dimensional shape of a face of a person and its reflection characteristics; a step of applying makeup to said measured three-dimensional shape; a step of fitting to said measured three-dimensional shape a face standard three-dimensional shape with a modification rule held in advance; a step of estimating a position and an orientation of a face in an image obtained by photographing the face of said person, by the use of said measured three-dimensional shape and reflection characteristics; a step of estimating an expression change of the face in said image; and a step of generating makeup in the image so as to match the face by the use of said estimated position and orientation of the face and said estimated expression change, and displaying it.

In the eighth invention, a ninth invention is characterized by comprising, instead of the step of estimating a position and an orientation of a face in an image obtained by photographing the face of said person, by the use of said three-dimensional shape and said reflection characteristics, a step of producing bases in advance from said three-dimensional shape and said reflection characteristics, said bases adapted for estimating positions and orientations of the face in various postures and under various illumination conditions; and a step of estimating the position and the orientation of the face in the image by the use of said bases.

In the eighth invention, a tenth invention is characterized by comprising, instead of the step of estimating an expression change of the face in the image obtained by photographing the face of said person, a step of producing bases in advance from said measured three-dimensional shape and reflection characteristics, said bases adapted for estimating positions and orientations of the face in various postures and under various illumination conditions; and a step of estimating the expression change of the face in the image by the use of said bases and said face standard three-dimensional shape with said modification rule.

In the eighth, ninth, or tenth invention, an eleventh invention is characterized in that a texture image with a little shade is used instead of said reflection characteristics.

A twelfth invention is characterized by comprising three-dimensional shape measuring means for measuring a three-dimensional shape of a face of a person; eyeglasses selection and fitting means for fitting selected eyeglasses to said measured three-dimensional shape; face position and orientation estimation means for estimating a position and an orientation of a face in a face image obtained by photographing the face of said person; eyeglasses image generation means for generating an eyeglasses image in which the eyeglasses are arranged so as to match the face in said face image by the use of said estimated position and orientation of the face; and face and eyeglasses combination display means for combining together said face image and said eyeglasses image and displaying a combined image.

A thirteenth invention is characterized by comprising three-dimensional shape and reflection characteristic measuring means for measuring a three-dimensional shape of a face of a person and its reflection characteristics; eyeglasses selection and fitting means for fitting selected eyeglasses to said measured three-dimensional shape; face position and orientation estimation means for estimating a position and an orientation of a face in a face image obtained by photographing the face of said person, by the use of said three-dimensional shape and said reflection characteristics; eyeglasses image generation means for generating an eyeglasses image in which the eyeglasses are arranged so as to match the face in said face image by the use of said estimated position and orientation of the face; and face and eyeglasses combination display means for combining together said face image and said eyeglasses image and displaying a combined image.

In the thirteenth invention, a fourteenth invention is characterized by comprising, instead of said face position and orientation estimation means, geodetic illumination calculation means for producing geodetic illumination bases in advance from said three-dimensional shape and said reflection characteristics, said bases adapted for estimating positions and orientations of the face in various postures and under various illumination conditions; and face position and orientation estimation means for estimating the position and the orientation of the face in the face image by the use of said bases.

In the twelfth, thirteenth, or fourteenth invention, a fifteenth invention is characterized in that said face position and orientation estimation means, said eyeglasses image generation means, and said face and eyeglasses combination display means are successively carried out.

In the twelfth, thirteenth, fourteenth, or fifteenth invention, a sixteenth invention is characterized in that, instead of said eyeglasses, an earring, a headgear, a hairpiece, or another mount object for a head, or a combination thereof is combined with the image.

In the thirteenth, fourteenth, fifteenth, or sixteenth invention, a seventeenth invention is characterized in that a texture image with a little shade is used instead of said reflection characteristics.

An eighteenth invention is characterized by comprising three-dimensional shape measuring means for measuring a three-dimensional shape of a face of a person; makeup means for applying makeup to said measured three-dimensional shape; face standard three-dimensional model and modification rule storage means for storing a face standard three-dimensional shape with a modification rule held in advance; three-dimensional model fitting means for fitting said face standard three-dimensional model to said measured three-dimensional shape; face position and orientation estimation means for estimating a position and an orientation of a face in a face image obtained by photographing the face of said person; face component modification estimation means for estimating an expression change of the face in said face image; makeup image generation means for generating a makeup image in, which the makeup applied by said makeup means is modified so as to match the face in said face image by the use of said estimated position and orientation of the face and said estimated expression change; and face and makeup combination display means for combining together said face image and said makeup image and displaying a combined image.

A nineteenth invention is characterized by comprising three-dimensional shape measuring means for measuring a three-dimensional shape of a face of a person and its reflection characteristics; makeup means for applying makeup to said measured three-dimensional shape; face standard three-dimensional model and modification rule storage means for storing a face standard three-dimensional shape with a modification rule held in advance; three-dimensional model fitting means for fitting said face standard three-dimensional model to said measured three-dimensional shape; face position and orientation estimation means for estimating a position and an orientation of a face in a face image obtained by photographing the face of said person, by the use of said measured three-dimensional shape and reflection characteristics; face component modification estimation means for estimating an expression change of the face in said face image; makeup image generation means for generating a makeup image in which the makeup applied by said makeup means is modified so as to match the face in said face image by the use of said estimated position and orientation of the face and said estimated expression change; and face and makeup combination display means for combining together said face image and said makeup image and displaying a combined image.

In the nineteenth invention, a twentieth invention is characterized by comprising, instead of said face position and orientation estimation means, geodetic illumination base calculation means for producing geodetic illumination bases in advance from said three-dimensional shape and said reflection characteristics, said bases adapted for estimating positions and orientations of the face in various postures and under various illumination conditions; and face position and orientation estimation means for estimating the position and the orientation of the face in the face image by the use of said bases.

In the nineteenth invention, a twenty-first invention is characterized by comprising, instead of said face component modification estimation means, geodetic illumination base calculation means for producing geodetic illumination bases in advance from said measured three-dimensional shape and reflection characteristics, said bases adapted for estimating positions and orientations of the face in various postures and under various illumination conditions; and face component modification estimation means for estimating the expression change of the face in the face image by the use of said bases and said face standard three-dimensional shape with said modification rule.

In the nineteenth, twentieth, or twenty-first invention, a twenty-second invention is characterized in that a texture image with a little shade is used instead of said reflection characteristics.

A twenty-third invention is a program for causing a computer to execute a step of measuring a three-dimensional shape of a face of a person; a step of fitting eyeglasses to said measured three-dimensional shape; a step of estimating a position and an orientation of a face in an image obtained by photographing the face of said person; and a step of producing the eyeglasses in the image so as to match the face by the use of said estimated position and orientation of the face, and displaying it.

A twenty-fourth invention is a program for causing a computer to execute a step of measuring a three-dimensional shape of a face of a person and its reflection characteristics; a step of fitting eyeglasses to said measured three-dimensional shape; a step of estimating a position and an orientation of a face in an image obtained by photographing the face of said person, by the use of said three-dimensional shape and said reflection characteristics; and a step of producing the eyeglasses in the image so as to match the face by the use of said estimated position and orientation of the face, and displaying it.

In the twenty-fourth invention, a twenty-fifth invention is a program characterized by comprising, instead of the step of estimating a position and an orientation of a face in an image obtained by photographing the face of said person, by the use of said three-dimensional shape and said reflection characteristics, a step of producing bases in advance from said three-dimensional shape and said reflection characteristics, said bases adapted for estimating positions and orientations of the face in various postures and under various illumination conditions; and a step of estimating the position and the orientation of the face in the image by the use of said bases.

A twenty-sixth invention is a program for causing a computer to execute a step of measuring a three-dimensional shape of a face of a person; a step of applying makeup to said measured three-dimensional shape; a step of fitting to said measured three-dimensional shape a face standard three-dimensional shape with a modification rule held in advance; a step of estimating a position and an orientation of a face in an image obtained by photographing the face of said person; a step of estimating an expression change of the face in said image; and a step of generating makeup in the image so as to match the face by the use of said estimated position and orientation of the face and said estimated expression change, and displaying it.

A twenty-seventh invention is a program for causing a computer to execute a step of measuring a three-dimensional shape of a face of a person and its reflection characteristics; a step of applying makeup to said measured three-dimensional shape; a step of fitting to said measured three-dimensional shape a face standard three-dimensional shape with a modification rule held in advance; a step of estimating a position and an orientation of a face in an image obtained by photographing the face of said person, by the use of said measured three-dimensional shape and reflection characteristics; a step of estimating an expression change of the face in said image; and a step of generating makeup in the image so as to match the face by the use of said estimated position and orientation of the face and said estimated expression change, and displaying it.

In the twenty-seventh invention, a twenty-eighth invention is a program characterized by comprising, instead of the step of estimating a position and an orientation of a face in an image obtained by photographing the face of said person, by the use of said three-dimensional shape and said reflection characteristics, a step of producing bases in advance from said three-dimensional shape and said reflection characteristics, said bases adapted for estimating positions and orientations of the face in various postures and under various illumination conditions; and a step of estimating the position and the orientation of the face in the image by the use of said bases.

The operation of the present invention will be described.

In case of combining eyeglasses with a face image (each of images of a face successively photographed by a camera) of a user, a three-dimensional shape of the face of the person is first measured in advance by three-dimensional shape measuring means. Thereafter, eyeglasses selection and fitting means fits eyeglasses selected by the user to the three-dimensional shape, face position and orientation estimation means estimates a position and an orientation of a face in a face image obtained by photographing the face of the person, and eyeglasses image generation means generates an eyeglasses image in which the eyeglasses are arranged so as to match the face in the face image by the use of the estimated position and orientation. Face and eyeglasses combination display means combines the face image and the eyeglasses image and displays a combined image.

In case of applying makeup to a face image of a user, a three-dimensional shape of a face of the person is first measured in advance by three-dimensional shape measuring means. Thereafter, makeup is applied to the measured three-dimensional shape by the use of makeup means. Further, a face standard three-dimensional model with a modification rule assigned is fitted to the measured three-dimensional shape by three-dimensional model fitting means. Then, face position and orientation estimation means estimates a position and an orientation of a face in a face image, and face component modification estimation means estimates an expression change and so forth of the face in the image. Thereafter, a makeup image is produced in which the makeup applied by the makeup means is modified so as to match the face in the face image by the use of the estimated position, orientation, and expression change, and the face image and the makeup image are combined together by the use of face and makeup combination display means.

Brief Description of the Drawings

Fig. 1 is a functional block diagram for describing the overall structure of an eyeglasses simulation device according to a first embodiment of the present invention.

Fig. 2 is an explanatory diagram of a coordinate system of a face.

Figs. 3A to 3C are explanatory diagrams of 3D data of eyeglasses.

Figs. 4A to 4D are explanatory diagrams of a method of combining eyeglasses with a face image.

Fig. 5 is a functional block diagram for describing a detailed structure of face position/orientation estimation means.

Fig. 6 is a functional block diagram for describing the overall structure of a makeup simulation device according to a second embodiment of the present invention.

Fig. 7 is an explanatory diagram of makeup means.

Fig. 8 is an explanatory diagram of fitting between a face standard 3D shape model and measured 3D data.

Figs. 9A to 9D are explanatory diagrams of a modification method of a face and corresponding makeup generation by the use of a standard 3D model and its modification rule.

Figs. 10A to 10C are explanatory diagrams of a method of combining a makeup image with a face image.

Fig. 11 is a schematic block diagram showing the overall structure of a computer system applied with the eyeglasses simulation device and the makeup simulation device.

Best Mode for Carrying Out the Invention

Hereinbelow, embodiments of the present invention will be described in detail with reference to the drawings.

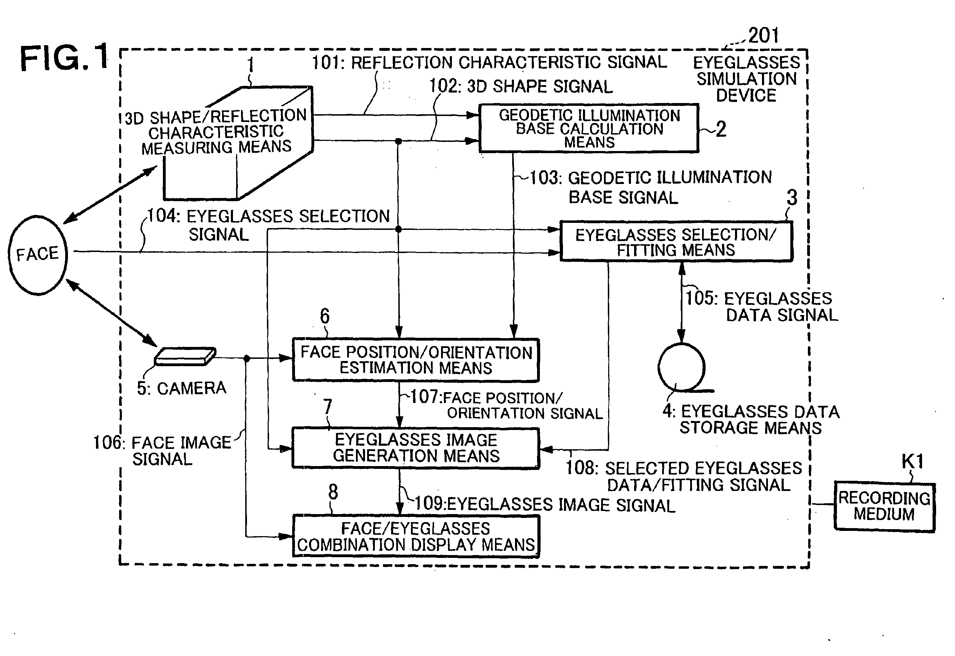

At the outset, the first embodiment of the present invention will be described referring to Fig. 1.

An eyeglasses simulation device 201 shown in Fig. 1 carries out a process of measuring both a three-dimensional shape of a face and its reflection characteristics, and a process of successively photographing face images by the use of a normal camera and combining eyeglasses with the photographed respective face images in sequence.

Three-dimensional (3D) shape/reflection characteristic measuring means 1 measures a three-dimensional shape of a face of a person serving as a subject and its reflection characteristics or a texture image with a little shade that corresponds to the reflection characteristics, and outputs them as a three-dimensional shape signal 102 and a reflection characteristic signal 101, respectively.

As a method of measuring the foregoing three-dimensional shape, it is possible to utilize, for example, JP-A-2001-012925 "Three-Dimensional Shape Measuring Method and Device, and Recording Medium" (hereinafter, "Document 14"). In addition, it is possible to utilize various existent techniques described in "Three-Dimensional Image Measurement" (Iguchi/Sato, Shokodo) (hereinafter, "Document 15") and so forth as methods for three-dimensional shape measurement. In the method of Document 14, the texture image can also be obtained simultaneously with the three-dimensional shape. Accordingly, by disposing a plurality of lamps around the face so that the light is uniformly applied to the whole face, it is possible to easily measure a texture image that can be approximately deemed as the reflection characteristics. The present invention can also be configured by any other technique insofar as it can measure reflection characteristics at respective positions of the face.

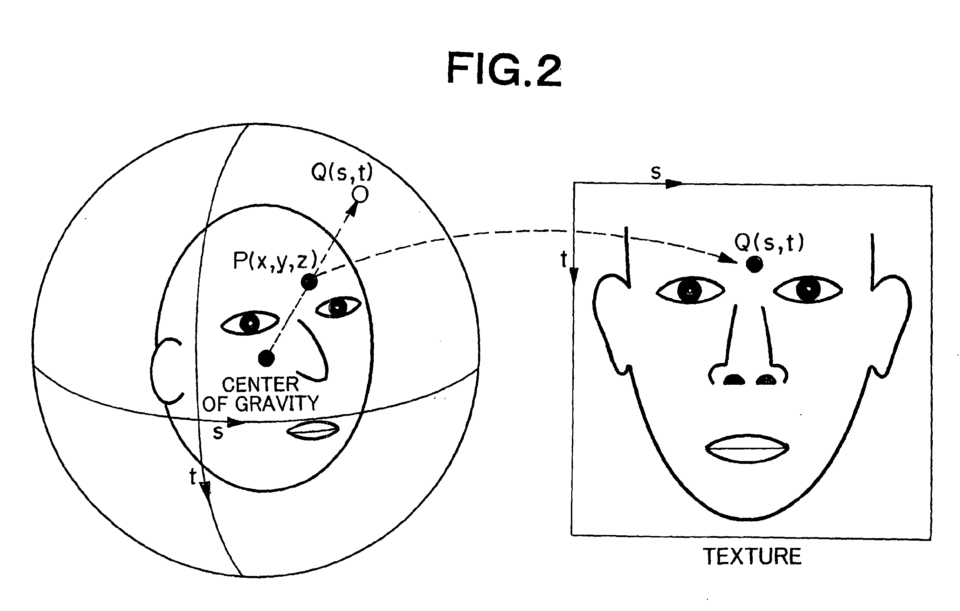

On the other hand, as shown in Fig. 2, assuming a sphere having the center at the center of gravity of a face being a measurement object and enveloping the face, there is set a coordinate system for representing three-dimensional coordinate values at a point P on the surface of the face and its texture value. The point P can be unifiedly represented by longitude/latitude (s, t) of a point Q obtained by projecting the point P onto the surface of the foregoing sphere with respect to the center of gravity as the center. For the three-dimensional shape and the texture image obtained by the three-dimensional shape/reflection characteristic measuring means 1, it is assumed that three-dimensional coordinate values

$$\vec{X}$$

at the point P and its texture value B are unifiedly represented as

$$\vec{X}(s, t)$$

and B(s, t), respectively, by the coordinate values (s, t) on the foregoing coordinate system. With respect to this coordinate system, the present invention can be configured by any coordinate system insofar as it can deal with the three-dimensional shape and the texture in a correlated manner.

Geodetic illumination base calculation means 2 is inputted with the three-dimensional shape signal 102 and the reflection characteristic signal 101, produces a base for approximating the look of a face under given illumination, and outputs it as a geodetic illumination base signal 103. The geodetic illumination base method is described in JP-A-2002-157595 "Object Verification Method, Object Verification Device, and Recording Medium Recording Program Thereof" (hereinafter, "Document 16"). Hereinbelow, description will be given about the geodetic illumination base calculation means 2 according to Document 16.

First, by the use of the technique of computer graphics and so forth, the shade and a change in brightness or color due to the shadow are calculated at respective positions on the surface of the face to thereby produce a texture group under various illumination conditions. A change in brightness or color due to a change in shade of a kernel of the texture can be calculated from a reflectance of the surface of the object corresponding to the pixel, a normal direction that can be calculated from the three-dimensional shape, and a direction of the illumination. With respect to the generation of the shadow, by carrying out processing such as light tracking using the three-dimensional shape, it is possible to judge whether or not the light hits under the illumination condition set for the foregoing pixel. Let a full scattering surface be assumed as reflection characteristics of the surface of the object, and further assuming that the shape of the object is convex and thus there is no shadow caused by shielding of a light source due to other portions and that the light source is located at an infinite point, a brightness value $I_i(s, t)$ of each pixel (s, t) of the texture under i-th illumination can, from a reflection characteristic B(s, t) of the surface of the face corresponding to the pixel, a normal direction

$$\vec{N}(s, t)$$

an intensity $I_i$ of each illumination, and its direction

$$\vec{L_i}(s, t)$$

be calculated by the following equation.

$$I_i(s, t) = B(s, t) l_i \max\left(\vec{L} \cdot \vec{N}(s, t), 0\right)$$

After arraying $I_i(s, t)$ as a column vector and further arraying it in a row direction per illumination to produce a matrix so as to derive covariance vectors, eigen values $\{\lambda_i\}$ and eigen vectors

$$\{\vec{e_i}\}$$

are derived by a main component analysis. Here, let the eigen values $\{\lambda_i\}$ and the eigen vectors

$$\{\vec{e_i}\}$$

be arrayed in order of larger to smaller eigen values. Then, for example, a selection is made of the minimum number of the eigen vectors that cause the cumulative contribution rate of the eigen values to be 99% or more, which are called "geodetic illumination bases". Thereby, a proper number of, for example, about ten, geodetic illumination bases can be obtained. These geodetic illumination bases approximate the whole texture group.

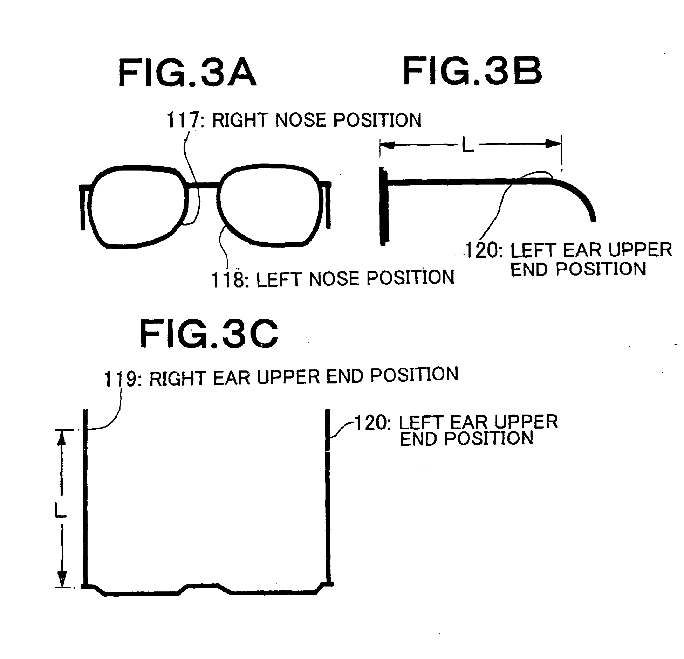

Eyeglasses selection/fitting means 3 uses as inputs the three-dimensional shape signal 102, an eyeglasses selection signal 104, and an eyeglasses three-dimensional data signal 105, reads from eyeglasses data storage means 4 the eyeglasses data signal 105 being three-dimensional shape data of eyeglasses designated by the user, refers to the measured face three-dimensional shape to determine a size and a position of eyeglasses fitted thereto, and outputs them as a selected eyeglasses three-dimensional data/fitting signal 108. Figs. 3A to 3C show one example of three-dimensional shape data of eyeglasses.

As shown in Figs. 3A to 3C, three-dimensional shape data of each pair of eyeglasses is given a right nose position 117, a left nose position 118, a right ear upper end position 119, and a left ear upper end position 120. By changing a length L of each bow so that the face three-dimensional shape and the respective corresponding positions match together, the fitting is achieved. The relative positions between the face and the eyeglasses and the length L of each bow in this event are outputted as the selected eyeglasses three-dimensional data/fitting signal 108. Although it has been described here that the fitting is achieved by the use of the nose positions and the ear upper end positions, it is possible to use any technique that can achieve fitting of eyeglasses, such as the technique described in the foregoing Document 7.

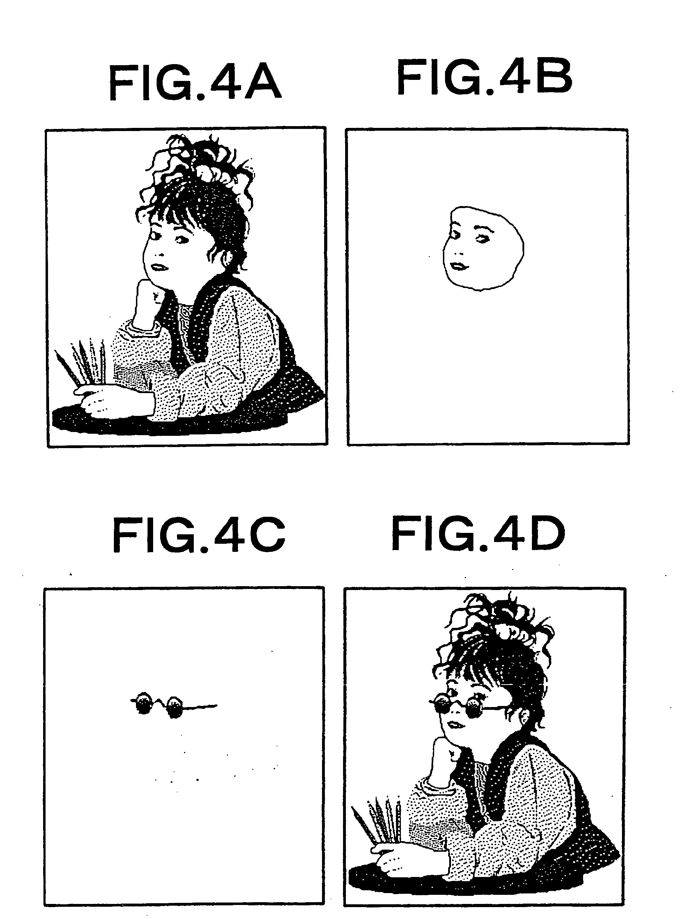

A camera 5 successively photographs images of a face of a person serving as a subject and outputs a face image signal 106 composed of a plurality of frames. Fig. 4A shows one example of the face image signal 106 (one frame).

Face position/orientation estimation means 6 is inputted with the face image signal 106, the three-dimensional shape signal 102, and the geodetic illumination base signal 103 and, as described in the foregoing Document 16, obtains a position and an orientation of the face for each frame of the face image signal 106 by repeatedly searching for a more suitable posture, and outputs them as a face position/orientation signal 107.

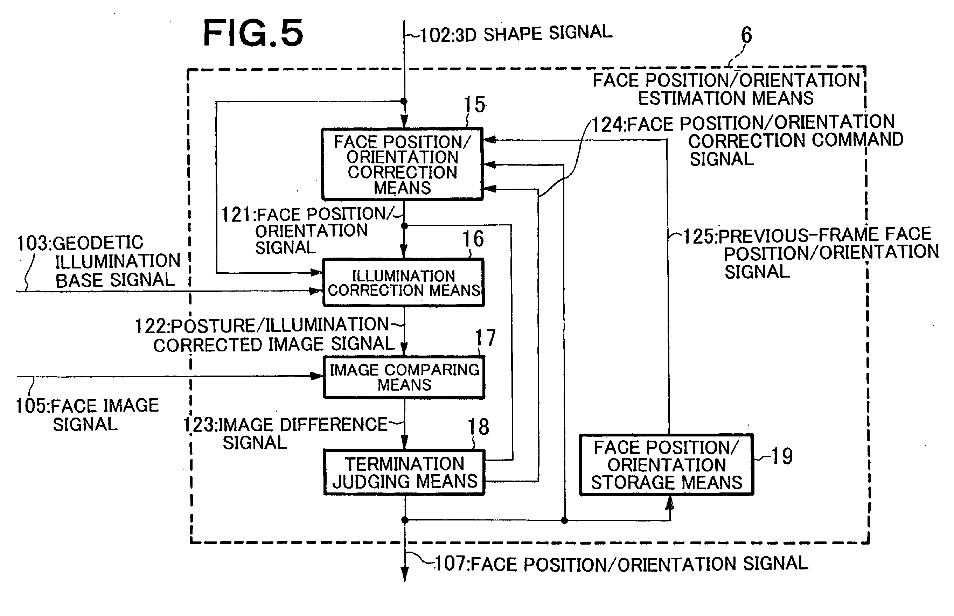

The face position/orientation estimation means 6 will be described in detail using Fig. 5. Although the processing for one frame of the face image signal will be described hereinbelow, the same processing is carried out for each frame.

It is assumed that the camera 5 is a pinhole camera having a focal length f, its view direction is along a Z-axis, and directions parallel to a vertical axis and a horizontal axis of a screen are along a Y-axis and an X-axis, respectively. This XYZ coordinate system is used as a reference, and let a position of the face of the person serving as the subject in front of the camera 5 be $(T_X, T_Y, T_Z)^T$ and its orientation be $(R_X, R_Y, R_Z)^T$. In this event, respective coordinate positions $(x_i, y_i, z_i)^T$ of the measured face three-dimensional shape exist at coordinate positions $(X_i, Y_i, Z_i)^T$ in front of the camera 5.

$$\begin{pmatrix} X_i \\ Y_i \\ Z_i \end{pmatrix} = \begin{pmatrix} \cos R_Y \cos R_Z & -\cos R_X \sin R_Z + \sin R_X \sin R_Y \cos R_Z & \sin R_Z \sin R_X + \cos R_X \sin R_Y \cos R_Z \\ \cos R_Y \sin R_Z & \cos R_X \cos R_Z + \sin R_X \sin R_Y \sin R_Z & -\cos R_Z \sin R_X + \cos R_X \sin R_Y \sin R_Z \\ -\sin R_Y & \sin R_X \cos R_Y & \cos R_X \cos R_Y \end{pmatrix} \begin{pmatrix} x_i \\ y_i \\ z_i \end{pmatrix} + \begin{pmatrix} T_X \\ T_Y \\ T_Z \end{pmatrix}$$

When the vertical axis and the horizontal axis of the camera screen are given as a v-axis and a u-axis, respectively, the coordinate positions of the face located at the coordinates $(X_i, Y_i, Z_i)^T$ are projected onto positions $(u_i, v_i)^T$ on the screen.

$$\begin{pmatrix} u_i \\ v_i \end{pmatrix} = \frac{f}{Z_i} \begin{pmatrix} X_i \\ Y_i \end{pmatrix}$$

On the basis of an initially set face position $(T_X^0, T_Y^0, T_Z^0)^T$ and its orientation $(R_X^0, R_Y^0, R_Z^0)^T$, face position/orientation correction means 15 produces slightly corrected $(T_X^0+\Delta T_X, T_Y^0+\Delta T_Y, T_Z^0+\Delta T_Z)^T$ and $(R_X^0+\Delta R_X, R_Y^0+\Delta R_Y, R_Z^0+\Delta R_Z)^T$ and outputs them as a face position/orientation signal 121.

Illumination correction means 16 is inputted with the face position/orientation signal 121, the three-dimensional shape signal 102, and the geodetic illumination base signal 103, and sticks the plurality of eigen vectors

$$\{g_{c,i}\}$$

forming the geodetic illumination bases on the three-dimensional shape by the technique of computer graphics to carry out image generation, respectively, to thereby obtain corrected images

$$\{y_i^{t}\}$$

as many as the number of the eigen vectors. Then, the illumination correction means 16 outputs the corrected images as a posture/illumination corrected image signal 122.

Image comparing means 17 is inputted with the face image signal 105 and the posture/illumination corrected image signal 122, derives parameters $\{a_i\}$ in the following expression such that a difference from the face image

$$y_k^{t}$$

becomes minimum, and outputs this difference as an image difference signal 123.

$$\left[\overset{\rho}{K} - \sum_{i} a_i \overset{\rho}{J_i}\right]^2$$

Termination judging means 18 is inputted with the image difference signal 123 and the face position/orientation signal 121 and, if the difference becomes sufficiently small, it judges that the estimation of the position and orientation of the face has been terminated, and outputs the face position and orientation at that time as the face position/orientation signal 107. If judged not yet terminated, the termination judging means 18 outputs a command for recalculating the face position and orientation through recorrection as a face position/orientation correction command signal 124. Face position/orientation storage means 19 is inputted with the face position/orientation signal 107, stores those values, and outputs them as a previous-frame face position/orientation signal 125 depending on necessity.

The description has been given above about the technique of repeating the simple correction as the face position/orientation estimation means 6, but the present invention can also be configured by another correction technique. Fig. 4B shows an example of the result of drawing by the three-dimensional shape using the estimation result about the face position and orientation of the subject.

Eyeglasses image generation means 7 is inputted with the three-dimensional shape signal 102, the face position/orientation signal 107, and the selected eyeglasses data/fitting signal 108, arranges the face three-dimensional shape data in the same position and orientation as those of the face photographed on the face image signal 106, and arranges the eyeglasses three-dimensional shape data by the use of the relative positional relationship derived for fitting to the face three-dimensional shape data. Here, by drawing only the eyeglasses according to the three-dimensional graphics technique, an eyeglasses image adapted to be fitted to the face originally photographed on the face image signal 106 can be created and is outputted as an eyeglasses image signal 109. Of the frame of the eyeglasses, bow portions are shielded by the head so as not to be seen. However, since the eyeglasses image generation means 7 refers to the three-dimensional shape of the face of the subject person that is arranged to match the face image, the shielding judgment can be carried out quite easily to allow only those portions being seen to be drawn. Fig. 4C shows an example of drawing the eyeglasses.

Face/eyeglasses combination display means 8 is inputted with the face image signal 106 and the eyeglasses image signal 109, and overlays the eyeglasses image upon the face image to combine them to thereby produce and display an image with the eyeglasses put on. Fig. 4D shows an example of a final combined image. In this event, it is possible to not only display the photographed image as it is, but display the image by turning it from side to side so that it looks like reflection in a mirror.

A recording medium K1 is a disk, a semiconductor memory, or another recording medium, and records therein a program for causing a computer to work as the eyeglasses simulation device 201. This program, when read by the eyeglasses simulation device 201, controls the operation thereof to realize the three-dimensional shape/reflection characteristic measuring means 1, the geodetic illumination base calculation means 2, the eyeglasses selection/fitting means 3, the face position/orientation estimation means 6, the eyeglasses image generation means 7, and the face/eyeglasses combination display means 8 on the eyeglasses simulation device 201.

In the foregoing embodiment, the means for detecting the position and orientation of the face has been described by the use of the geodetic illumination base method described in the foregoing Document 16. However, the present invention can be configured by any method insofar as it is a position/orientation estimation method with high accuracy. Although the foregoing face/eyeglasses combination display means 8 has been described as simply combining together the eyeglasses image and the face image, the present invention can also be configured by refracting the face image to express it more naturally on the basis of lens prescription values necessary for eyesight correction, as described in JP-A-2001-331550 "Eyeglasses Frame Selection System" (hereinafter, Document 17).

Further, although the description has been given about the eyeglasses in the foregoing embodiment, the present invention can be configured similarly for another mount object for the head, such as an earring, a headgear, or a hairpiece. In case of the earring or hairpiece, the present invention can also be configured by adding movement or modification to the earring or hairpiece itself in consideration of movement of the face to thereby enable more natural display. Further, the present invention can be configured not only for only one of the individual mount objects, but for a combination thereof.

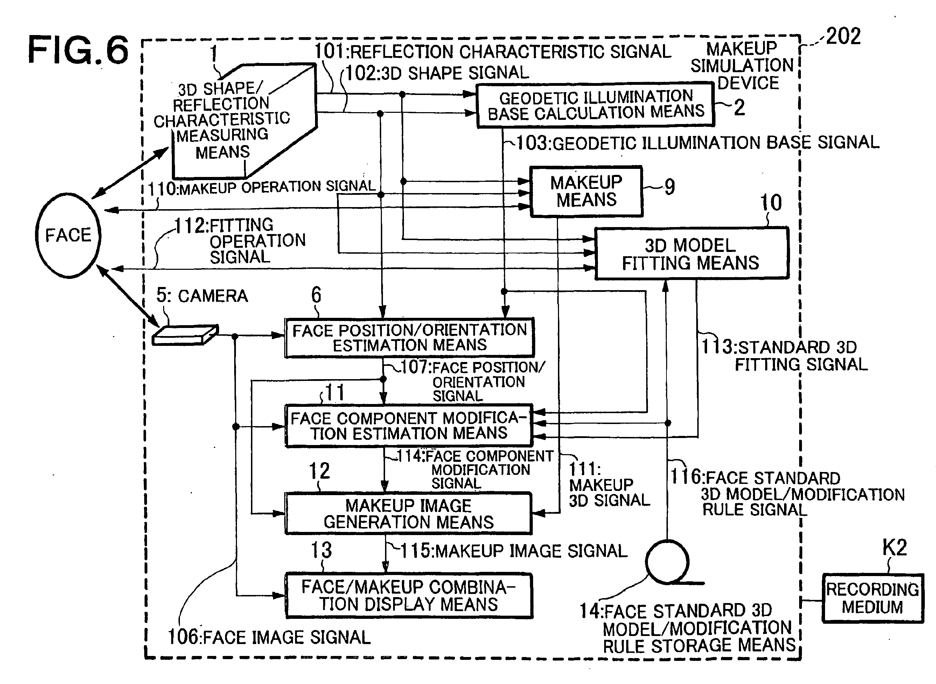

The second embodiment of the present invention will be described referring to Fig. 6.

A makeup simulation device 202 shown in Fig. 6 carries out a process of measuring both a three-dimensional shape of a face and its reflection characteristics, and a process of successively photographing face images by the use of a normal camera and combining makeup with the photographed respective face images in sequence. In the following description, only those means different from the first embodiment will be described in detail.

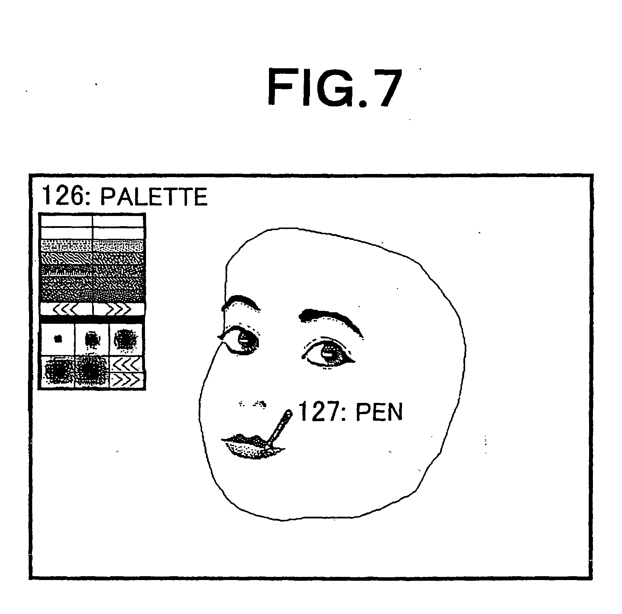

Makeup means 9 is inputted with a three-dimensional shape signal 102, a reflection characteristic signal 101, and a makeup operation signal 110, applies makeup to a measured face, and outputs finally achieved makeup as a makeup three-dimensional signal 111. A makeup method can be configured by once producing a two-dimensional face image and using the technique of applying makeup to the image as described in the foregoing Documents 11, 12, and 13 and so forth, then by conversely deriving corresponding positions of the shape. Alternatively, an operation environment such as a three-dimensional CAD may be configured. Fig. 7 shows one example. Reflection characteristics are texture-mapped onto the three-dimensional shape, and an image seen from a proper direction is created by the technique of computer graphics as shown in Fig. 7. A suitable color and a suitable pen point are selected from a palette 126 and makeup is applied by a pen 127 (makeup operation signal 110). With this operation, it is possible to produce makeup at respective coordinate positions. As shown in Fig. 2, a makeup value at a point P can be unifiedly represented in the same coordinate system as that of the three-dimensional shape and the reflection characteristics by longitude/latitude (s, t) of a point Q obtained by projecting the point P onto the surface of the aforementioned sphere with respect to the center of gravity as the center. The produced makeup is outputted as the makeup three-dimensional signal 111.

Three-dimensional model fitting means 10 is inputted with the three-dimensional shape signal 102, the reflection characteristic signal 101, a fitting operation signal 112, and a face standard three-dimensional model/modification rule signal 116, correlates between the measured three-dimensional shape and a face standard three-dimensional model with an expression change rule assigned, and outputs a correlation therebetween as a standard three-dimensional fitting signal 113. For this fitting, it is possible to directly use a technique between three-dimensional shapes described in The Institute of Electronics, Information and Communication Engineers Research Express HCS2001-32 "Construction of Expression Modification Rule and Expression Editing Tool using Range Finder" (hereinafter, Document 18). Further, if a two-dimensional face image is once created using measured data; the present invention can be configured even by the technique of dealing with the two-dimensional image as described in the foregoing Document 8 and Document 9. The present invention can be configured by any technique insofar as it carries out the correlating as described above.

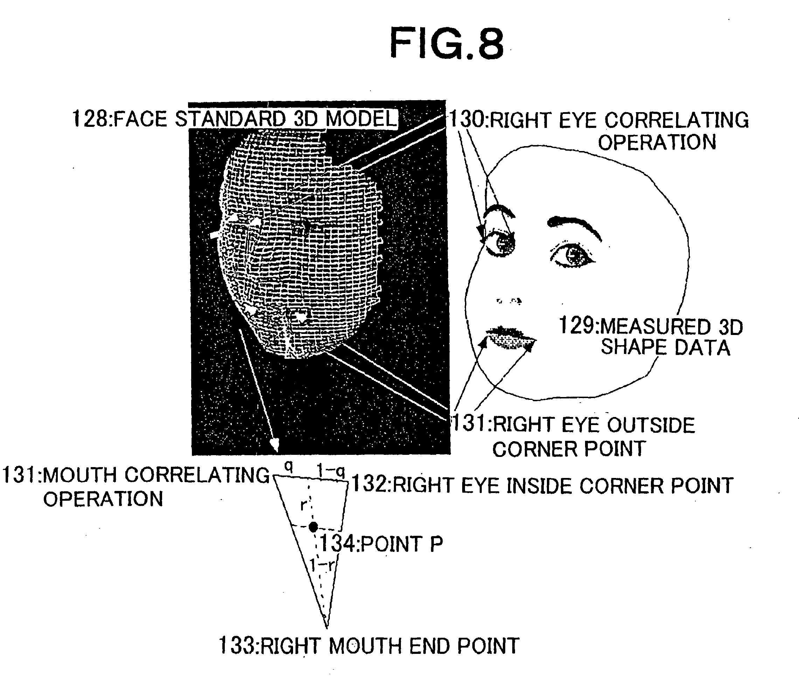

Referring to Fig. 8, one example of the fitting will be shown. Correlating between a face standard three-dimensional model 128 and measured three-dimensional shape data 129 is carried out by executing a right eye correlating operation 130 for correlating between right eye inside corners and outside corners of both, a mouth correlating operation 131 for correlating between left and right mouth ends of both, and so forth to thereby designate reference points that should have the same coordinate values. Parameters a to p that minimize the following expression are derived so that n reference points $(x_i, y_i, z_i)^T$ on the correlated face standard three-dimensional model and corresponding reference points $(x_i', y_i', z_i')^T$ on the measured three-dimensional shape data become approximately equal to each other.

$$\left[\begin{pmatrix} x_1 & x_2 & \cdots & x_n \\ y_1 & y_2 & \cdots & y_n \\ z_1 & z_2 & \cdots & z_n \\ 1 & 1 & \cdots & 1 \end{pmatrix} - \begin{pmatrix} a & b & c & d \\ e & f & g & h \\ i & j & k & l \\ m & n & o & p \end{pmatrix} \begin{pmatrix} x_1' & x_2' & \cdots & x_n' \\ y_1' & y_2' & \cdots & y_n' \\ z_1' & z_2' & \cdots & z_n' \\ 1 & 1 & \cdots & 1 \end{pmatrix}\right]^2$$

In the above expression, the respective points on the correlated face standard three-dimensional model do not fully coincide with the corresponding points on the measured three-dimensional shape data. Therefore, the respective reference points are further displaced by $(\Delta x_i, \Delta y_i, \Delta z_i)$ representing respective residuals, i.e. $(x_i- (ax_i'+by_i'+cz_i'+d), y_i-(ex_i'+fy_i'+gz_i'+h), z_i- (ix_i'+jy_i'+kz_i'+1))^T$, so that the coincidence is achieved. With respect to coordinate points located between the reference points, they are first displaced by residuals that are weighted according to distances from the corresponding reference points.

For example, as shown on the lower side in Fig. 7, the displacement amount of a point P 134 in a region characterized by a right eye outside corner point 131, a right eye inside corner point 132, and a right mouth end point 133 is derived by the following equation when the point P 134 is located at a position represented by the ratio shown in the figure. Herein, let q·r be a real number taking a value from 0 to 1.

$$\begin{pmatrix} \Delta x_p^1 \\ \Delta y_p^1 \\ \Delta z_p^1 \end{pmatrix} = (1-r)\left[(1-q)\begin{pmatrix} \Delta x_{RP1} \\ \Delta y_{RP1} \\ \Delta z_{RP1} \end{pmatrix} + q\begin{pmatrix} \Delta x_{RP2} \\ \Delta y_{RP2} \\ \Delta z_{RP2} \end{pmatrix}\right] + r\begin{pmatrix} \Delta x_{RP3} \\ \Delta y_{RP3} \\ \Delta z_{RP3} \end{pmatrix}$$

where RP1 is a right eye outside corner point, RP2 is a right eye inside corner point, and RP3 is a right mouth end point.

Then, the point is displaced in a direction perpendicular to the triangle on the lower side in Fig. 7 by

$$\begin{pmatrix} \Delta x_p{}^2 \\ \Delta y_p{}^2 \\ \Delta z_p{}^2 \end{pmatrix} = k \begin{pmatrix} (y_{RP2} - y_{RP1}) \cdot (z_{RP3} - z_{RP1}) - (y_{RP3} - y_{RP1}) \cdot (z_{RP2} - z_{RP1}) \\ (z_{RP2} - z_{RP1}) \cdot (x_{RP3} - x_{RP1}) - (z_{RP3} - z_{RP1}) \cdot (x_{RP2} - x_{RP1}) \\ (x_{RP2} - x_{RP1}) \cdot (y_{RP3} - y_{RP1}) - (x_{RP3} - x_{RP1}) \cdot (y_{RP2} - y_{RP1}) \end{pmatrix}$$

where RP1 is a right eye outside corner point, RP2 is a right eye inside corner point, and RP3 is a right mouth end point, so as to fully coincide with a measured data point. The parameters a to p and the displacement amounts $(\Delta x_p{}^1, \Delta y_p{}^1, \Delta z_p{}^1)^T$ and $(\Delta x_p{}^2, \Delta y_p{}^2, \Delta z_p{}^2)^T$ of respective vertex coordinates on the face standard three-dimensional model obtained by the foregoing operation are outputted as the standard three-dimensional fitting signal 113. Thereby, all the points on the face standard three-dimensional model are mapped onto the measured data.

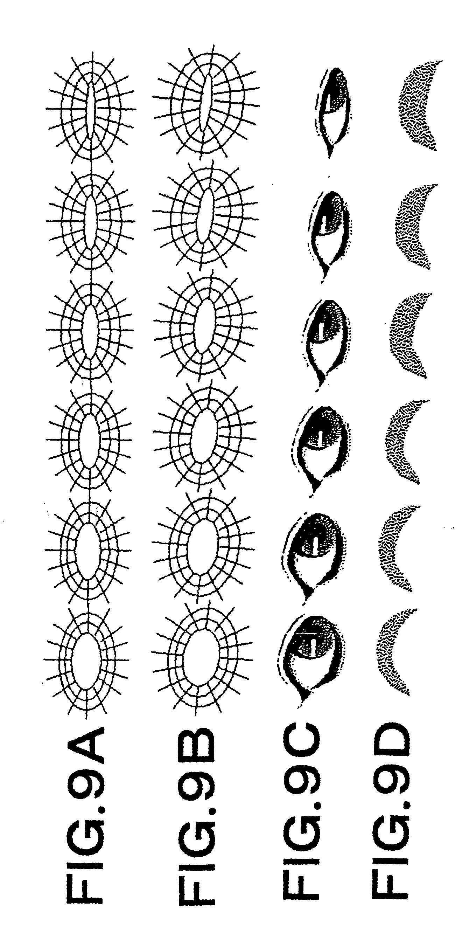

The face standard three-dimensional model used in this embodiment is assigned a modification rule. The modification rule is defined such that expression changes that can be done by a human being, such as opening and closing of eyes and opening and closing of a mouth, are controllable as displacement amounts of respective coordinate points on the three-dimensional model. Fig. 9A is an exemplary diagram showing an eye modification rule in the modification rule, wherein the leftmost represents an initial state and displacement amounts of coordinate points are assigned by giving an opening amount of the eye so that a series of motions are realized like the eye is gradually narrowed.

In Fig. 9C, the leftmost eye is a measured face three-dimensional shape, while Fig. 9B is an exemplary diagram wherein the face standard three-dimensional model is fitted to the measured shape. As a result of this, by closing eyelids of the fitted face standard three-dimensional model, natural modification of the measured face three-dimensional shape is resultantly made possible. Fig. 9D is an exemplary diagram of eyeshadow texture-mapped onto the measured face three-dimensional shape. Modification of the eyeshadow is also made possible following the modification of the face standard three-dimensional model.

Face component modification estimation means 11 is inputted with a face position/orientation signal 107, the standard three-dimensional shape signal 102, a geodetic illumination base signal 103, a face image signal 106, the standard three-dimensional fitting signal 113, and the face standard three-dimensional mode/modification rule signal 116, carries out modification processing according to the modification rule with respect to the face standard three-dimensional model, and adds modification to the measured three-dimensional shape and the geodetic illumination bases on the surface thereof. Through this processing, it is possible to obtain a plurality of three-dimensional shapes corresponding to respective expressions (e.g. expression with eyelids closed, expression with eyelids open, expression with eyelids half closed, and so forth).

Thereafter, on the three-dimensional shapes corresponding to the respective expressions, a plurality of eigen vectors

$$\{ \varepsilon_i \}$$

forming geodetic illumination bases corresponding to those three-dimensional shapes are stuck by the technique of computer graphics to thereby produce templates corresponding to the respective expressions. Then, the change amount of the expression is estimated by comparing each template and the face image to select the template closest to the face image, and is outputted as a face component modification signal 114. Fig. 9C shows a template of closing eyelids, which is obtained by modifying the standard three-dimensional model shown in Fig. 9A.

Makeup image generation means 12 is inputted with the three-dimensional shape signal 101, the face position/orientation signal 107, the makeup three-dimensional signal 111, and the face component modification signal 114, produces a makeup image in which initially applied makeup is modified so as to be fitted to the image, and outputs it as a makeup image signal 115. Face/makeup combination display means 13 is inputted with the face image signal 106 and the makeup image signal 115, and overlays the makeup image upon the face image to produce and display an image after the makeup.

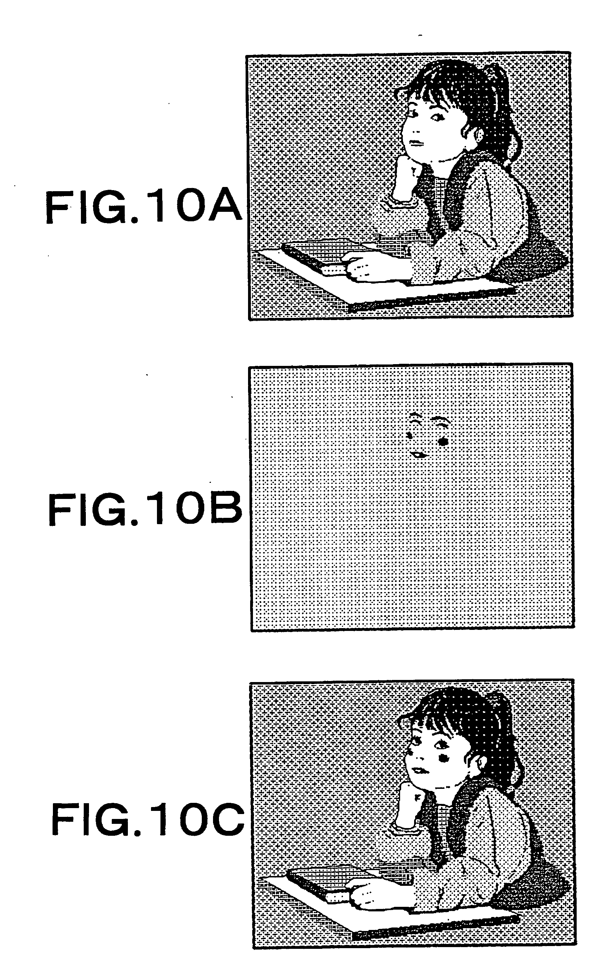

Fig. 10A shows a face image example to be inputted, Fig. 10B shows a makeup image example, and Fig. 10C shows a combined image example. It is possible to not only display the combined image as it is, but display the image by turning it from side to side so that it looks like reflection in a mirror. Further, the foregoing face/makeup combination display means 13 has been described as overlaying the makeup image upon the face image, but a more natural combined image can be obtained by combining the makeup image with transparency given.

Face standard three-dimensional model/modification rule storage means 14 stores face standard three-dimensional models with rules of face modification to be caused by expressions and so forth, and outputs them as the face standard three-dimensional model/modification rule signal 116 upon occasion.

A recording medium K2 is a disk, a semiconductor memory, or another recording medium, and records therein a program for causing a computer to work as the makeup simulation device 202. This program, when read by the makeup simulation device 202, controls the operation thereof to realize the three-dimensional shape/reflection characteristic measuring means 1, the geodetic illumination base calculation means 2, the face position/orientation estimation means 6, the makeup means 9, the three-dimensional model fitting means 10, the face component modification estimation means 11, the makeup image generation means 12, and the face/makeup combination display means 13 on the makeup simulation device 202.

In the foregoing embodiment, the means for detecting the position and orientation of the face has been described by the use of the geodetic illumination base method described in the foregoing Document 15. However, the present invention can be configured by any method insofar as it is a position/orientation estimation method with high accuracy. Similarly, although the face component modification estimation means has been described by the use of the geodetic illumination base method described in the foregoing Document 15 in an extended manner, the present invention can be configured by any technique insofar as it estimates face component modification. Further, the foregoing description corresponds to one frame of the face image signal 106 outputted from the camera 5, and operation like the foregoing operation is carried out in sequence for the respective frames forming the face image signal 106.

Further, the description has been given about the makeup in the foregoing embodiment, but the present invention can be configured likewise with respect to painting for a face in general.

Although the mount object for the head, such as the eyeglasses, and the makeup have been described as the different embodiments, the present invention can be configured likewise for a combination thereof.

According to the present invention, it is possible to realize the image synthesis method and apparatus, and the storage means that combine, without unnaturalness, a mount object for a head, such as eyeglasses, an earring, a headgear, or a hairpiece, makeup, or the like with a face image photographed in the state where such mounting or makeup, or the like is not actually carried out.

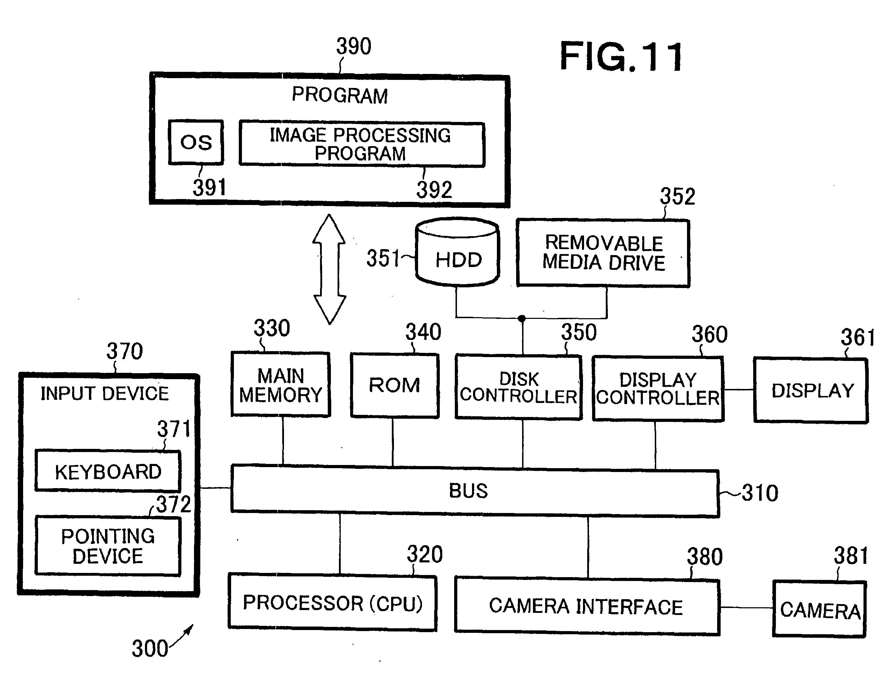

Next, a structural example of a computer system to be applied with the foregoing eyeglasses simulation device 201 and makeup simulation device 202 will be described based on Fig. 11.

A computer system 300 shown in Fig. 11 comprises a bus 310 and, as respective components connected to the bus 310, a processor 320 such as a CPU dealing with information processing in the system, a main memory 330, a ROM (read-only memory) 340, a disk controller 350, a display controller 360, an input device 370, and a camera interface 380.

The main memory 330 is formed by, for example, a RAM (random access memory) or another dynamic storage device (e.g. DRAM, SRAM, or the like), stores commands and information of programs executed by the processor 320, and further is capable of storing variables temporarily produced during execution of the programs by the processor 320, and other intermediate information.

The ROM 340 is formed by, for example, a static storage device (e.g. PROM, EPROM, EEPROM, or the like) and stores fixed information and commands processed by the processor 320.

To the disk controller 350 are connected an HDD (hard disk drive) 151 and/or a removable media drive (magnetic disk, optical disk, magnet-optical disk, or the like) 152. The HDD 351 and/or the removable disk 352 are/is driven by the disk controller 350 and store/stores various information and commands processed by the processor 320.

To the display controller 360 is connected a display 361, for example, a CRT (Cathode Ray Tube), a liquid crystal display, or the like. The display 361 is driven by the disk controller 360 and displays various information and images designated by the processor 320.

The input device 370 comprises, for example, a keyboard 371, a pointing device (mouse or the like) 372, and so forth. The input device 370 sends to the processor 320 various information and commands that are inputted, designated, and selected by user's operations.

The camera interface 380 is installed with, for example, a standard communication interface (either wire or wireless can be adopted), and a camera 381 formed by a CCD or CMOS solid image pickup device and so forth is connected via the communication interface. An image signal photographed by the camera 381 is taken in via the camera interface 380.

Programs (OS 391, image processing program 392, and so forth) 390 executed by the foregoing computer system 300 are stored in, for example, the ROM 340 and the recording medium in the system, such as the hard disk 351, and are executed by the processor 320. Through the instruction execution of the programs 390 by the processor 320, the foregoing respective steps of the present invention are realized.

The present invention is not limited to the foregoing embodiments illustrated only as typical examples. Various modifications or changes can be made by a person skilled in the art based on the described contents of claims within a range not departing from the gist thereof, and those modifications or changes also belong to the scope of the right of the present invention.

Industrial Applicability

As described above, the present invention is suitable for application to an eyeglasses simulation device, a makeup simulation device, or the like by the use of a compute system.

**Claims**

1.  A head-mounted object image synthesis method comprising:

    a step of measuring a three-dimensional shape of a face of a person;
    a step of fitting eyeglasses to said measured three-dimensional shape;
    a step of estimating a position and an orientation of a face in an image obtained by photographing the face of said person; and
    a step of producing the eyeglasses in the image so as to match the face by the use of said estimated position and orientation of the face, and displaying it.

2.  A head-mounted object image synthesis method comprising:

    a step of measuring a three-dimensional shape of a face of a person and its reflection characteristics;
    a step of fitting eyeglasses to said measured three-dimensional shape;
    a step of estimating a position and an orientation of a face in an image obtained by photographing the face of said person, by the use of said three-dimensional shape and said reflection characteristics; and
    a step of producing the eyeglasses in the image so as to match the face by the use of said estimated position and orientation of the face, and displaying it.

3.  The head-mounted object image synthesis method according to claim 2, comprising, instead of the step of estimating a position and an orientation of a face in an image obtained by photographing the face of said person, by the use of said three-dimensional shape and said reflection characteristics:

    a step of producing bases in advance from said three-dimensional shape and said reflection characteristics, said bases adapted for estimating positions and orientations of the face in various postures and under various illumination conditions; and
    a step of estimating the position and the orientation of the face in the image by the use of said bases.

4.  The head-mounted object image synthesis method according to any of claims 1 to 3, wherein the step of estimating a position and an orientation of a face in an image obtained by photographing the face of said person and the step of producing the eyeglasses in the image so as to match the face by the use of said estimated position and orientation of the face, and displaying it, are .successively carried out.

5.  The head-mounted object image synthesis method according to any one of claims 1 to 4, wherein, instead of said eyeglasses, an earring, a headgear, a hairpiece, or another mount object for a head, or a combination thereof is combined with the image.

6.  The head-mounted object image synthesis method according to any one of claims 2 to 5, wherein a texture image with a little shade is used instead of said reflection characteristics.

7.  A makeup image synthesis method comprising:

    a step of measuring a three-dimensional shape of a face of a person;
    a step of applying makeup to said measured three-dimensional shape;
    a step of fitting to said measured three-dimensional shape a face standard three-dimensional shape with a modification rule held in advance;
    a step of estimating a position and an orientation of a face in an image obtained by photographing the face of said person;
    a step of estimating an expression change of the face in said image; and
    a step of generating makeup in the image so as to match the face by the use of said estimated position and orientation of the face and said estimated expression change, and displaying it.

**8.** A makeup image synthesis method comprising:

a step of measuring a three-dimensional shape of a face of a person and its reflection characteristics;
a step of applying makeup to said measured three-dimensional shape;
a step of fitting to said measured three-dimensional shape a face standard three-dimensional shape with a modification rule held in advance;
a step of estimating a position and an orientation of a face in an image obtained by photographing the face of said person, by the use of said measured three-dimensional shape and reflection characteristics;
a step of estimating an expression change of the face in said image; and
a step of generating makeup in the image so as to match the face by the use of said estimated position and orientation of the face and said estimated expression change, and displaying it.

**9.** The makeup image synthesis method according to claim 8, comprising, instead of the step of estimating a position and an orientation of a face in an image obtained by photographing the face of said person, by the use of said three-dimensional shape and said reflection characteristics:

a step of producing bases in advance from said three-dimensional shape and said reflection characteristics, said bases adapted for estimating positions and orientations of the face in various postures and under various illumination conditions; and
a step of estimating the position and the orientation of the face in the image by the use of said bases.

**10.** The makeup image synthesis method according to claim 8, comprising, instead of the step of estimating an expression change of the face in the image obtained by photographing the face of said person:

a step of producing bases in advance from said measured three-dimensional shape and reflection characteristics, said bases adapted for estimating positions and orientations of the face in various postures and under various illumination conditions; and
a step of estimating the expression change of the face in the image by the use of said bases and said face standard three-dimensional shape with said modification rule.

**11.** The makeup image synthesis method according to any one of claims 8 to 10, wherein a texture image with a little shade is used instead of said reflection characteristics.

**12.** A head-mounted object image synthesis device comprising:

three-dimensional shape measuring means for measuring a three-dimensional shape of a face of a person;
eyeglasses selection and fitting means for fitting selected eyeglasses to said measured three-dimensional shape;
face position and orientation estimation means for estimating a position and an orientation of a face in a face image obtained by photographing the face of said person;
eyeglasses image generation means for generating an eyeglasses image in which the eyeglasses are arranged so as to match the face in said face image by the use of said estimated position and orientation of the face; and
face and eyeglasses combination display means for combining together said face image and said eyeglasses image and displaying a combined image.

**13.** A head-mounted object image synthesis device comprising:

three-dimensional shape and reflection characteristic measuring means for measuring a three-dimensional shape of a face of a person and its reflection characteristics;
eyeglasses selection and fitting means for fitting selected eyeglasses to said measured three-dimensional shape;
face position and orientation estimation means for estimating a position and an orientation of a face in a face image obtained by photographing the face of said person, by the use of said three-dimensional shape and said reflection characteristics;
eyeglasses image generation means for generating an eyeglasses image in which the eyeglasses are arranged so as to match the face in said face image by the use of said estimated position and orientation of the face; and
face and eyeglasses combination display means for combining together said face image and said eyeglasses image and displaying a combined image.

**14.** The head-mounted object image synthesis device according to claim 13, comprising, instead of said face position and orientation estimation means:

geodetic illumination calculation means for producing geodetic illumination bases in advance from said three-dimensional shape and said reflection characteristics, said bases adapted for estimating positions and orientations of the face in various postures and under various illumination conditions; and
face position and orientation estimation means for estimating the position and the orientation of the face in the face image by the use of said bases.

**15.** The head-mounted object image synthesis device according to any one of claims 12 to 14, wherein said face position and orientation estimation means, said eyeglasses image generation means, and said face and eyeglasses combination display means are successively carried out.

**16.** The head-mounted object image synthesis device according to any one of claims 12 to 15, wherein, instead of said eyeglasses, an earring, a headgear, a hairpiece, or another mount object for a head, or a combination thereof is combined with the image.

**17.** The head-mounted object image synthesis device according to any one of claims 13 to 16, wherein a texture image with a little shade is used instead of said reflection characteristics.

**18.** A makeup image synthesis device comprising:

three-dimensional shape measuring means for measuring a three-dimensional shape of a face of a person;
makeup means for applying makeup to said measured three-dimensional shape;
face standard three-dimensional model and modification rule storage means for storing a face standard three-dimensional shape with a modification rule held in advance;
three-dimensional model fitting means for fitting said face standard three-dimensional model to said measured three-dimensional shape;
face position and orientation estimation means for estimating a position and an orientation of a face in a face image obtained by photographing the face of said person;
face component modification estimation means for estimating an expression change of the face in said face image;
makeup image generation means for generating a makeup image in which the makeup applied by said makeup means is modified so as to match the face in said face image by the use of said estimated position and orientation of the face and said estimated expression change; and
face and makeup combination display means for combining together said face image and said makeup image and displaying a combined image.

**19.** A makeup image synthesis device comprising:

three-dimensional shape measuring means for measuring a three-dimensional shape of a face of a person and its reflection characteristics;
makeup means for applying makeup to said measured three-dimensional shape;
face standard three-dimensional model and modification rule storage means for storing a face standard three-dimensional shape with a modification rule held in advance;
three-dimensional model fitting means for fitting said face standard three-dimensional model to said measured three-dimensional shape;
face position and orientation estimation means for estimating a position and an orientation of a face in a face image obtained by photographing the face of said person, by the use of said measured three-dimensional shape and reflection characteristics;
face component modification estimation means for estimating an expression change of the face in said face image;
makeup image generation means for generating a makeup image in which the makeup applied by said makeup means is modified so as to match the face in said face image by the use of said estimated position and orientation of the face and said estimated expression change; and
face and makeup combination display means for combining together said face image and said makeup image and displaying a combined image.

20. The makeup image synthesis device according to claim 19, comprising, instead of said face position and orientation estimation means:

geodetic illumination base calculation means for producing geodetic illumination bases in advance from said three-dimensional shape and said reflection characteristics, said bases adapted for estimating positions and orientations of the face in various postures and under various illumination conditions; and
face position and orientation estimation means for estimating the position and the orientation of the face in the face image by the use of said bases.

21. The makeup image synthesis device according to claim 19, comprising, instead of said face component modification estimation means:

geodetic illumination base calculation means for producing geodetic illumination bases in advance from said measured three-dimensional shape and reflection characteristics, said bases adapted for estimating positions and orientations of the face in various postures and under various illumination conditions; and
face component modification estimation means for estimating the expression change of the face in the face image by the use of said bases and said face standard three-dimensional shape with said modification rule.

22. The makeup image synthesis device according to any one of claims 19 to 21, wherein a texture image with a little shade is used instead of said reflection characteristics.

23. A program for causing a computer to execute:

a step of measuring a three-dimensional shape of a face of a person;
a step of fitting eyeglasses to said measured three-dimensional shape;
a step of estimating a position and an orientation of a face in an image obtained by photographing the face of said person; and
a step of producing the eyeglasses in the image so as to match the face by the use of said estimated position and orientation of the face, and displaying it.

24. A program for causing a computer to execute:

a step of measuring a three-dimensional shape of a face of a person and its reflection characteristics;
a step of fitting eyeglasses to said measured three-dimensional shape;
a step of estimating a position and an orientation of a face in an image obtained by photographing the face of said person, by the use of said three-dimensional shape and said reflection characteristics; and
a step of producing the eyeglasses in the image so as to match the face by the use of said estimated position and orientation of the face, and displaying it.

25. The program according to claim 24, comprising, instead of the step of estimating a position and an orientation of a face in an image obtained by photographing the face of said person, by the use of said three-dimensional shape and said reflection characteristics:

a step of producing bases in advance from said three-dimensional shape and said reflection characteristics, said bases adapted for estimating positions and orientations of the face in various postures and under various illumination conditions; and
a step of estimating the position and the orientation of the face in the image by the use of said bases.

26. A program for causing a computer to execute:

a step of measuring a three-dimensional shape of a face of a person;
a step of applying makeup to said measured three-dimensional shape;
a step of fitting to said measured three-dimensional shape a face standard three-dimensional shape with a modification rule held in advance;
a step of estimating a position and an orientation of a face in an image obtained by photographing the face of said person;
a step of estimating an expression change of the face in said image; and
a step of generating makeup in the image so as to match the face by the use of said estimated position and orientation of the face and said estimated expression change, and displaying it.

27. A program for causing a computer to execute:

a step of measuring a three-dimensional shape of a face of a person and its reflection characteristics;
a step of applying makeup to said measured three-dimensional shape;
a step of fitting to said measured three-dimensional shape a face standard three-dimensional shape with a modification rule held in advance;
a step of estimating a position and an orientation of a face in an image obtained by photographing the face of said person, by the use of said measured three-dimensional shape and reflection characteristics;
a step of estimating an expression change of the face in said image; and
a step of generating makeup in the image so as to match the face by the use of said estimated position and orientation of the face and said estimated expression change, and displaying it.

28. The program according to claim 27, comprising, instead of the step of estimating a position and an orientation of a face in an image obtained by photographing the face of said person, by the use of said three-dimensional shape and said reflection characteristics:

a step of producing bases in advance from said three-dimensional shape and said reflection characteristics, said bases adapted for estimating positions and orientations of the face in various postures and under various illumination conditions; and
a step of estimating the position and the orientation of the face in the image by the use of said bases.

# FIG.1

201: EYEGLASSES SIMULATION DEVICE

101: REFLECTION CHARACTERISTIC SIGNAL

102: 3D SHAPE SIGNAL

1: 3D SHAPE/REFLECTION CHARACTERISTIC MEASURING MEANS

FACE

2: GEODETIC ILLUMINATION BASE CALCULATION MEANS

103: GEODETIC ILLUMINATION BASE SIGNAL

104: EYEGLASSES SELECTION SIGNAL

3: EYEGLASSES SELECTION/FITTING MEANS

105: EYEGLASSES DATA SIGNAL

4: EYEGLASSES DATA STORAGE MEANS

5: CAMERA

6: FACE POSITION/ORIENTATION ESTIMATION MEANS

107: FACE POSITION/ORIENTATION SIGNAL

106: FACE IMAGE SIGNAL

7: EYEGLASSES IMAGE GENERATION MEANS

108: SELECTED EYEGLASSES DATA/FITTING SIGNAL

109: EYEGLASSES IMAGE SIGNAL

8: FACE/EYEGLASSES COMBINATION DISPLAY MEANS

K1: RECORDING MEDIUM

EP 1 501 046 A1

# FIG.2

CENTER
OF GRAVITY

TEXTURE

EP 1 501 046 A1

# FIG.3A

117: RIGHT NOSE POSITION

118: LEFT NOSE POSITION

# FIG.3B

L

120: LEFT EAR UPPER END POSITION

# FIG.3C

119: RIGHT EAR UPPER END POSITION

120: LEFT EAR UPPER END POSITION

L

FIG.4A

FIG.4B

FIG.4C

FIG.4D

FIG.5

6:FACE POSITION/ORIENTATION ESTIMATION MEANS

102:3D SHAPE SIGNAL

124:FACE POSITION/ORIENTATION CORRECTION COMMAND SIGNAL

125:PREVIOUS-FRAME FACE POSITION/ORIENTATION SIGNAL

15 FACE POSITION/ORIENTATION CORRECTION MEANS

16 ILLUMINATION CORRECTION MEANS

17 IMAGE COMPARING MEANS

18 TERMINATION JUDGING MEANS

19 FACE POSITION/ORIENTATION STORAGE MEANS

121:FACE POSITION/ORIENTATION SIGNAL

122:POSTURE/ILLUMINATION CORRECTED IMAGE SIGNAL

123:IMAGE DIFFERENCE SIGNAL

103:GEODETIC ILLUMINATION BASE SIGNAL

105:FACE IMAGE SIGNAL

107:FACE POSITION/ORIENTATION SIGNAL

22

FIG.6

MAKEUP SIMULATION DEVICE 202

1: 3D SHAPE/REFLECTION CHARACTERISTIC MEASURING MEANS

101:REFLECTION CHARACTERISTIC SIGNAL

102:3D SHAPE SIGNAL

2: GEODETIC ILLUMINATION BASE CALCULATION MEANS

103:GEODETIC ILLUMINATION BASE SIGNAL

110:MAKEUP OPERATION SIGNAL

9: MAKEUP MEANS

112:FITTING OPERATION SIGNAL

10: 3D MODEL FITTING MEANS

113:STANDARD 3D FITTING SIGNAL

5: CAMERA

6: FACE POSITION/ORIENTATION ESTIMATION MEANS

107:FACE POSITION/ORIENTATION SIGNAL

11: FACE COMPONENT MODIFICATION ESTIMATION MEANS

111: MAKEUP 3D SIGNAL

114:FACE COMPONENT MODIFICATION SIGNAL

12: MAKEUP IMAGE GENERATION MEANS

115:MAKEUP IMAGE SIGNAL

13: FACE/MAKEUP COMBINATION DISPLAY MEANS

106:FACE IMAGE SIGNAL

116:FACE STANDARD 3D MODEL/MODIFICATION RULE SIGNAL

14:FACE STANDARD 3D MODEL/MODIFICATION RULE STORAGE MEANS

K2 RECORDING MEDIUM

FACE

23

# FIG.7

126: PALETTE

127: PEN

# FIG.8

128:FACE STANDARD 3D MODEL

130:RIGHT EYE CORRELATING OPERATION

129:MEASURED 3D SHAPE DATA

131:RIGHT EYE OUTSIDE CORNER POINT

131:MOUTH CORRELATING OPERATION

132:RIGHT EYE INSIDE CORNER POINT

134:POINT P

133:RIGHT MOUTH END POINT

EP 1 501 046 A1

FIG.9A

FIG.9B

FIG.9C

FIG.9D

FIG.10A

FIG.10B

FIG.10C

FIG.11

## INTERNATIONAL SEARCH REPORT

| | International application No. |
|---|---|
| | PCT/JP03/11210 |

| A. CLASSIFICATION OF SUBJECT MATTER |
|---|
| Int.Cl⁷ G06T1/00, 17/40 |

According to International Patent Classification (IPC) or to both national classification and IPC

| B. FIELDS SEARCHED |
|---|

Minimum documentation searched (classification system followed by classification symbols)
Int.Cl⁷ G06T1/00, 11/60-17/50, G06F17/50

Documentation searched other than minimum documentation to the extent that such documents are included in the fields searched

| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)
JICST FILE(JOIS)

| C. DOCUMENTS CONSIDERED TO BE RELEVANT |
|---|

| Category* | Citation of document, with indication, where appropriate, of the relevant passages | Relevant to claim No. |
|---|---|---|
| Y | WO 99/23609 A1 (V.O.F. HEAD SCANNING), 14 May, 1999 (14.05.99), Full text; all drawings & JP 2001-522108 A & EP 1021797 A1 | 1-28 |
| Y | US 2002/0097906 A1 (NEC CORP.), 25 July, 2002 (25.07.02), Full text; all drawings & JP 2002-157595 A & EP 1223540 A2 | 1-28 |
| Y | Shunsuke OHASHI et al., 'Range Finder o Mochiita Hyojo Henkei Rule to Hyojo Henshu Tool no Kochiku', The Institute of Electronics, Information and Communication Engineers Gijutsu Kenkyu Hokoku, The Institute of Electronics, Information and Communication Engineers, 18 January, 2002 (18.01.02), Vol.101, No.610, pages 1 to 6 | 7-11,18-22, 26-28 |

| ☒ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier document but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 16 October, 2003 (16.10.03) | 28 October, 2003 (28.10.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

**INTERNATIONAL SEARCH REPORT**

International application No.

PCT/JP03/11210

| C (Continuation). DOCUMENTS CONSIDERED TO BE RELEVANT | | |
|---|---|---|
| Category* | Citation of document, with indication, where appropriate, of the relevant passages | Relevant to claim No. |
| A | US 6421629 B1 (NEC CORP.),<br>16 July, 2002 (16.07.02),<br>Full text; all drawings<br>& JP 2001-12925 A | 1-28 |

Form PCT/ISA/210 (continuation of second sheet) (July 1998)